# EUROPEAN PATENT SPECIFICATION

(11) **EP 3 083 219 B1**
(45) Date of publication and mention of the grant of the patent: **06.05.2020**
(21) Application number: 14835500.1
(22) Date of filing: 15.12.2014
(51) Int. Cl.: B29D 30/00, G05B 23/02, G01M 17/02

(54) **METHOD AND APPARATUS TO CONTROL MANUFACTURING AND FEEDING OF SEMI-FINISHED PRODUCTS IN A TYRE BUILDING PROCESS**
VERFAHREN UND VORRICHTUNG ZUR STEUERUNG DER HERSTELLUNG UND ZUFÜHRUNG VON HALBZEUGEN IN EIN REIFENHERSTELLUNGSVERFAHREN
PROCÉDÉ ET APPAREIL POUR CONTRÔLER LA FABRICATION ET L'INTRODUCTION DE PRODUITS SEMI-FINIS DANS UN PROCESSUS D'ÉLABORATION DE PNEU

(30) Priority: 16.12.2013 IT MI20132101; 26.02.2014 EP 14156756
(43) Date of publication of application: 26.10.2016
(73) Proprietor: Pirelli Tyre S.p.A., 20126 Milano (IT)
(72) Inventor: AMURRI, Cesare Emanuele, I-20126 Milan (IT); CONTI, Davide Lupo, I-20126 Milan (IT); BOSCAINO, Ivan Gildo, I-20126 Milan (IT)
(74) Representative: Baroni, Matteo
(86) International application number: PCT/IB2014/066929
(87) International publication number: WO 2015/092659

(56) References cited:
- EP-A2- 0 125 146
- EP-A2- 0 376 105
- WO-A1-2007/051335
- WO-A1-2010/013553
- WO-A1-2012/085632
- WO-A1-2012/085632
- DE-A1- 10 321 770
- JP-A- 2008 197 479
- US-A- 4 253 113
- US-B1- 6 182 339

## Description

The present invention refers to a method to control manufacturing and feeding of semi-finished products in a tyre building process.

The present invention refers also to an apparatus to control manufacturing and feeding of semi-finished products in a tyre building process.

A tyre for vehicle wheels generally comprises a carcass structure comprising at least one carcass ply having respectively opposite terminal edges engaged to respective anchoring annular structures, generally called "bead cores", identified in the areas usually denoted as "beads", having an internal diameter substantially corresponding to a so-called "fitting diameter" of the tyre on a respective mounting rim. The tyre comprises also a crown structure comprising a belt structure having at least one belt strip, placed in a radially external position in relation to the carcass ply/ies, and one tread band radially external in relation to the belt strip/s. Between the tread band and the belt strip/s a so-called "underlayer" made of an elastomeric material having properties adapted to ensure a stable coupling of the belt strip/s with the tread band itself is interposed. On the side surfaces of the carcass structure, each one of them extending from one of the side edges of the tread band up to the respective anchoring annular structure to the beads, respective sidewalls made of elastomeric material are applied. In the tyres of "tubeless" type, the carcass ply is internally covered by a layer of a preferably butyl-based elastomeric material, usually called "liner" having optimal characteristics of air tightness and extending from one bead to the other.

The term "elastomeric material" intends to indicate a composition comprising at least one elastomeric polymer and at least one reinforcing filler. Preferably such composition comprises also additives such as a cross-linking agent and/or a plasticizer. Thanks to the presence of the cross-linking agent, such material can be cross-linked by heating, so as to form the final product.

"Semi-finished product" is to be intended as a continuous elongated element, having a flattened cross section, made of elastomeric material and incorporating one or more reinforcement cord, preferably textile or metal cords, placed parallel to each other in the longitudinal direction of the elongated element itself.

"Elementary semi-finished product" is to be intended as a cut-to-size piece of the aforementioned semi-finished product; the aforementioned elementary semi-finished product is in the following called "strip-like element".

"Minimum brightness value" is to be intended, in a black and white detection, as the brightness value that, in a digital detection, is given to the pixel of a digital image when substantially no photon is incident on the corresponding pixel of the detection device used.

In a colour detection, such minimum brightness value corresponds to the brightness value given to the sensor/s (e.g. a set of three sensors) associated to the same pixel, when substantially no photon is incident on said sensor or on each one of said sensors. In case of more sensors associated to the same pixel, each one can be for example devoted to the detection of a respective fundamental chromatic component of the light incident on such pixel.

"Maximum brightness value" is to be intended, in a black and white detection, as the brightness value that, in a digital detection, is given to the pixel of a digital image when the maximum number of photons that such corresponding pixel can receive are incident on the corresponding pixel of the detection device used, namely the number of photons that is able to saturate the capacity of the sensor itself associated to such pixel and forming part of said detection device. If a higher number of photons is received, the brightness value that is given remains equal to said maximum brightness value.

In a colour detection, such maximum brightness value corresponds to the brightness value given to the sensor/s (e.g. a set of three sensors) associated to the same pixel, when the maximum number of photons that such sensor/s is able to receive are incident on said sensor or on each one of said sensors. In case of more sensors associated to the same pixel, each one can be for example devoted to the detection of a respective fundamental chromatic component of the light incident on such pixel.

The strip-like elements, appropriately put in side by side relationship or partially overlapping each other, concur to the formation of various components of a tyre, by means of their deposition on a forming drum preferably having a substantially toroidal or a substantially cylindrical shape.

In particular, the strip-like elements can be used to make one or more carcass plies of the carcass structure and/or one or more belt strips or layers of the belt structure of the tyre.

The document WO2012/085632, in the name of the same Applicant, describes a method and an apparatus to control manufacturing and feeding of semi-finished products in a tyre building process.

The Applicant observed that, during the unwinding of semi-finished products from the reels on which they are wound together with the so-called service fabric (a film made of plastic material, preferably Polyester or Polyethylene), it may happen that portions of service fabric remain associated to the semi-finished product, even after the semi-finished product itself has been separated from the service fabric, mainly due to the adhesive properties of the compound which the semi-finished product is made of.

The Applicant verified also that, originally, the service fabric very often has a different length from the semi-finished product; for example, the service fabric may be available in pieces of about 700 m, while the length of the semi-finished product may vary between 2000 m and 4000 m, depending on the type of component that has to be made. Different portions of service fabric thus have to be joined to each other in order to reach a length suitable to the semi-finished product in question.

The Applicant verified also that the service fabric, after being separated from the semi-finished product during the unwinding step, is gathered into auxiliary reels to be used again subsequently. Such service fabric is used several times, also with semi-finished product having a different length with respect to the previous one, so that it is necessary to reduce the length of the service fabric or to increase its length by joining the service fabric itself with a further portion by means, for example, adhesive tape.

The Applicant observed that, following the separation between the service fabric (after several uses) and the semi-finished product, portions of service fabric or of adhesive tape used to join the latter can remain associated to the semi-finished product.

The Applicant observed also that the presence of residues of service fabric and/or adhesive tape on the semi-finished product can have extremely negative consequences on the structure, on the performance and on the integrity of the tyre, since such residues can prevent the correct adhesion between the strip-like elements of a component and/or between different components of the tyre.

The Applicant observed also that some types of tape used to join the service fabric can be particularly difficult to detect, above all by an artificial vision/detection system, since they are partially transparent or they have small dimensions and, when they are pressed against the semi-finished product, they tend to seems substantially of the same colour as the semi-finished product itself.

The Applicant had the intuition that, by setting appropriately the operating parameters of an artificial vision/detection system, it is possible to identify the presence of adhesive tape residues also in the most difficult cases, thus decreasing significantly the quantity of components or of tyres that have to be discarded during and/or at the end of the process.

The Applicant finally found that, by setting a threshold relating to brightness values detected in portions of images of the semi-finished product being controlled, it is possible to discriminate, in the digital images detected, portions of semi-finished product from residues of service fabric and of adhesive tape or foreign bodies in general, remarkably increasing the overall efficiency of the manufacturing process.

In accordance with a first aspect, the invention refers to a method to control manufacturing and feeding of semi-finished products in a tyre building process as claimed in claim 1.

In accordance with a second aspect, the invention refers to an apparatus to control manufacturing and feeding of semi-finished products in a tyre building process as claimed in claim 9.

The Applicant believes that in this way possible generic foreign bodies, residues of service fabric and residues of adhesive tape can be detected in an accurate and reliable way, also in those cases where the latter is substantially transparent and thus very difficult to be discriminated from the portions of semi-finished product that, instead, are not covered by such residues.

In accordance with one or more of the aforementioned aspects, the invention comprises one or more of the preferred characteristics described herebelow.

Preferably said first operating parameter is representative of an overall area occupied in said first reference image by the first portions associated to a lower brightness value than said first threshold.

Preferably said first notification signal is generated if said first operating parameter is lower than said second threshold.

Preferably said first image is a monochromatic image.

Preferably provision is made to cause the generation, if said first operating parameter is lower than said second threshold, of a first interruption signal in order to deactivate one or more actuators which promote the unwinding of said semi-finished product from said reel and/or its movement towards said building station.

Preferably provision is made to arrange a first reference image representative of a portion of semi-finished product substantially devoid of residues or foreign bodies, said first reference image being formed by a plurality of first reference portions, each one associated to a respective brightness value.

Preferably provision is made to compare the brightness values of said first reference portions with said first threshold.

Preferably provision is made to determine a first reference parameter representative of an overall area occupied in said first reference image by the first reference portions associated to a lower brightness value than said first threshold.

Preferably provision is made to determine said second threshold as a function of said first reference parameter.

Preferably arranging said first reference image comprises detecting an image of said semi-finished product in a portion thereof substantially devoid of residues or of foreign bodies.

Thus the first reference parameter is obtained in the same environmental conditions (e.g. brightness) in which the semi-finished product will be examined, making the method according to the invention further accurate and reliable.

Preferably said first image is detected by a first detection device facing said semi-finished product.

Preferably provision is made to send an electromagnetic radiation to at least said semi-finished product in order to allow or to facilitate the detection by said first detection device.

Thus, inaccuracies in the detection due to the variability of the brightness conditions in which the first detection device operates can be minimized.

Preferably, provision is made to arrange a first background wall opposite to said semi-finished product with respect to said first detection device.

Preferably said first background wall is such that the portion/s of said first image which reproduces/reproduce said first background wall is/are associated to higher brightness values than said first threshold.

Thus it is possible to optimize the quality of the detection carried out by the first detection device, providing a background that maximizes the contrast with the material which the semi-finished product is mainly made of.

Preferably said first image is representative of a portion of a first surface of said semi-finished product.

Preferably provision is made to detect a second image representative of a portion of a second surface of said semi-finished product, opposite to said first surface, said second image being formed by a plurality of second portions, each one associated to a respective brightness value.

Preferably provision is made to define a third threshold for said brightness values.

Preferably provision is made to perform a third comparison between the brightness value of said second portions and said third threshold for such brightness values. Preferably said third threshold is substantially equal to said first threshold.

Preferably provision is made to determine, as a function of said third comparison, a second operating parameter representative of an overall area occupied in said second image by the second portions associated to a lower brightness value than said third threshold.

Preferably provision is made to perform a fourth comparison between said second operating parameter and a fourth threshold.

Preferably said fourth threshold is substantially equal to said second threshold.

Preferably provision is made to cause the generation of a second notification signal as a function of said fourth comparison.

Thus it is possible to perform a verification on both surfaces of the semi-finished product, further decreasing the probability that a semi-finished product to which residues of service fabric and/or adhesive tape remained associated can be provided to the subsequent building station.

Preferably, arranging a second linear scale of the brightness values, defined between a third value corresponding to a null brightness value and a fourth value corresponding to a maximum brightness value, wherein the absolute value of the difference between said third value and said fourth value defines an amplitude of said second linear scale, said third threshold is defined in relation to said second linear scale.

Preferably said third threshold is such that the absolute value of the difference between said third threshold and said third value is comprised between 5% and 20% of the amplitude of said second linear scale.

Preferably said second operating parameter is representative of an overall area occupied in said second image by the second portions associated to a lower brightness value than said third threshold.

Preferably said second notification signal is generated if said second operating parameter is lower than said fourth threshold.

Preferably if said second operating parameter is lower than said fourth threshold, provision is made to generate second interruption signal is caused in order to deactivate one or more actuators which promote the unwinding of said semi-finished product from said reel and/or its movement towards said building station.

Preferably said first detection device faces the first surface of said semi-finished product.

Preferably said first image and said second image are detected in different positions of said path.

Thus it is avoided that the two detection operations interfere with each other.

Preferably said second image is detected by a second detection device facing the second surface of said semi-finished product.

Preferably provision is made to send an electromagnetic radiation to at least said semi-finished product in order to allow or to facilitate the detection by said second detection device.

Thus inaccuracies in the detection due to the variability of the brightness conditions in which the second detection device operates can be minimized.

Preferably, provision is made to arrange a second background wall opposite to said semi-finished product in relation to said second detection device.

Preferably said second background wall is such that the portion/s of said second image which reproduces/reproduce said first background wall is/are associated to higher brightness values than said third threshold.

Thus it is possible to optimize the quality of the detection carried out by the second detection device, providing a background that maximizes the contrast with the material which the semi-finished product is mainly made of.

Preferably said first processing unit is configured to cause the generation, if said first operating parameter is lower than said second threshold, of a first interruption signal to deactivate one or more actuators which promote the unwinding of said semi-finished product from said reel and/or its movement towards said building station.

Preferably a first emitting device is provided positioned on the same side as said semi-finished product with respect to said first detection device and configured to send an electromagnetic radiation to at least said semi-finished product to allow or to facilitate the detection of said first detection device.

Preferably, a first background wall is provided positioned opposite to said semi-finished product in relation to said first detection device.

Preferably said first detection device faces a first surface of said semi-finished product.

Preferably a second detecting device is provided facing a second surface of said semi-finished product, opposite to said first surface, said second detecting device being adapted to detect a second image representative of a portion of the second surface of said semi-finished product, said second image being formed by a plurality of second portions, each one associated to a respective brightness value.

Preferably a second memory is provided, configured to store a third threshold.

Preferably a second processing unit is provided, associated to said second detecting device.

Preferably said second processing unit is configured to perform a third comparison between the brightness values of said second portions and said third threshold.

Preferably said second operating parameter is configured to determine, as a function of said third comparison, a second operating parameter representative of an overall area occupied in said second image by the second portions associated to a lower brightness value than said third threshold.

Preferably said second processing unit is configured to perform a fourth comparison between said second operating parameter and a fourth threshold.

Preferably said second processing unit is configured to cause the generation of a second notification signal as a function of said fourth comparison.

Preferably said second processing unit is configured to cause the generation, if said second operating parameter is lower than said fourth threshold, of a second interruption signal to deactivate one or more actuators that promote the unwinding of said semi-finished product from said reel and/or its movement towards said building station. Preferably said first and second detection device are placed in different positions along the path followed by said semi-finished product during the unwinding of said reel and the movement towards said building station.

Preferably, a second background wall is provided positioned opposite to said semi-finished product in relation to said second detection device.

Preferably a second emitting device is provided, positioned on the same side as said semi-finished product with respect to said second detection device and configured to send an electromagnetic radiation to at least said semi-finished product to allow or to facilitate the detection of said second detection device.

Further characteristics and advantages will become more clear from the detailed description of a preferred, but not exclusive, embodiment of the invention. Such description is provided in the following with reference to the attached figures, given by way of example and thus not limitative, wherein:
- figure 1 shows schematically a part of a plant for building tyres wherein an apparatus in accordance with the present invention is inserted;
- figures 2a-2d show schematically illustrative images used in the apparatus and in the method according to the invention;
- figure 3 shows a block diagram of the apparatus of figure 1;
- figures 4a, 4b show some parameters used in the apparatus and in the method according to the invention;
- figure 5 shows schematically a detailed view of a device forming part of the apparatus of figure 1 and figure 3.

With reference to the attached figures, 1 indicates overall an apparatus to control manufacturing and feeding of semi-finished products in a tyre building process.

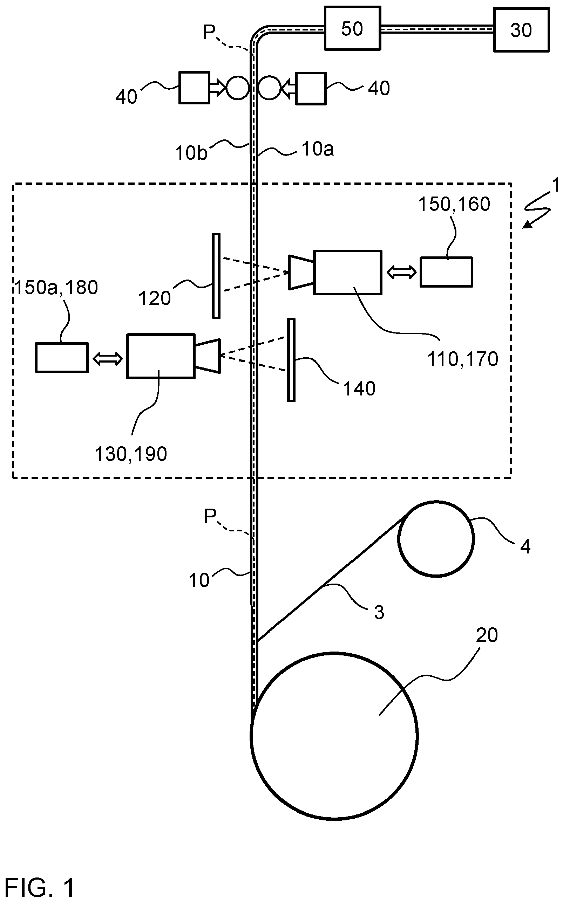

As shown schematically in figure 1, the apparatus 1 is used to control a semi-finished product 10, that is unwound from a reel 20.

Initially, the semi-finished product 10 is wound on the reel 20 together with a service fabric 3; during the unwinding from the reel 20, the semi-finished product 10 and the service fabric 3 are separated, in a way per se known.

The service fabric 3 is preferably wound on an auxiliary reel 4.

The semi-finished product 10, instead, is appropriately moved towards a subsequent building station 30, wherein elementary semi-finished products (not shown) are prepared and then used, starting from said semi-finished product 10.

In an embodiment, before being provided in input to the building station 30, the semi-finished product 10 is accumulated in an appropriate accumulation station 50, advantageously used to manage the processing time of the plant and the synchronization between the different stations.

The unwinding of the semi-finished product 10 from the reel 20 and the movement of the latter towards the building station 30 occurs by means of one or more appropriate actuators 40, preferably of the electromechanical type, associated for example to one or more rollers, that contribute to define the trajectory followed by the semi-finished product 10.

As shown schematically in figure 1, the semi-finished product 10 follows a path P from the reel 20 to the building station 30.

The apparatus 1 comprises first of all at least a first detection device 110 to detect at least a first image A representative of the semi-finished product 10.

The first detection device 110 may comprise a sensor or photosensitive element, able to convert the received light radiation into an electric signal, and the circuitry necessary to make such electric signal usable by other devices/apparatuses, which will be described more in detail in the following.

By way of example, the sensor can be of the CMOS type.

However, sensors of other types may also be used, provided that they have appropriate functional characteristics.

In an embodiment, the first detection device 110 may comprise or be associated to a polarizer filter.

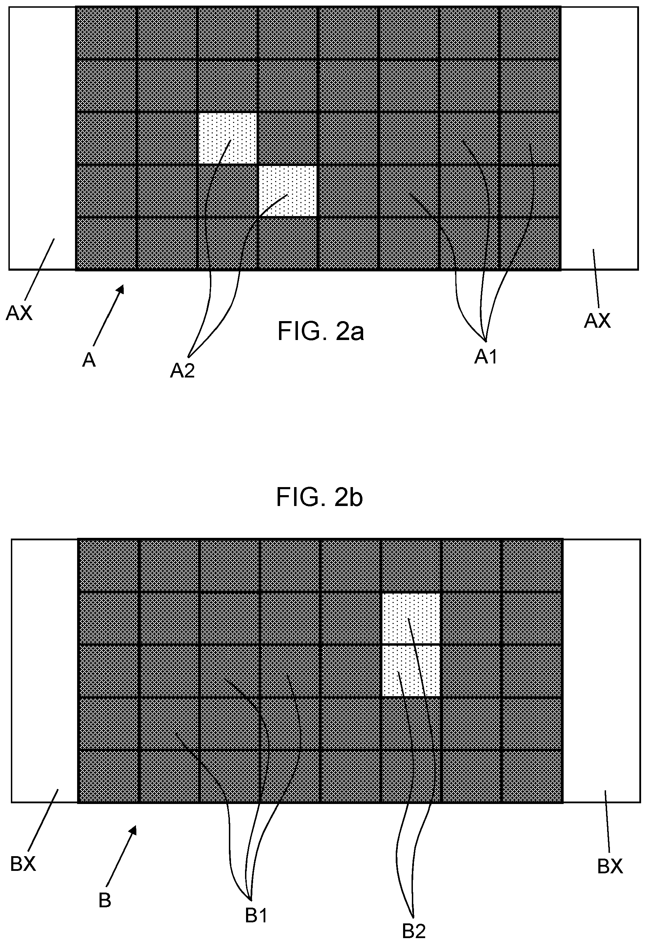

The first image A is formed by a plurality of first portions A1, A2, each one of them associated to a respective brightness value (figure 2a).

The first portions A1, A2 can be formed by single pixels, or by pixel groups.

In case each first portion A1, A2 is made by a single respective pixel, the brightness value given to such portion will be the brightness value of the respective pixel.

In case each portion A1, A2 comprises two or more pixels, the brightness value associated to the portion A1, A2 will be determined as a function of the brightness values of the various pixels which form the portion.

The Applicant observes that the brightness value of a pixel of an image is determined on the basis of the number of incident photons on the corresponding pixel of the sensor forming part of the first detection device 110.

In particular, the higher is the number of incident photons on a pixel of the sensor, the higher will be the brightness value given to the corresponding pixel in the image.

It has to be noted that each pixel of the sensor is able to receive a limited number of photons; this limit is imposed by the so-called sensor capacity.

If such pixel receives a number of photons equal to or higher than said limited number, the brightness value associated to such pixel will be a maximum value, and it will not be able to increase, even if the number of incident photons increase.

In figure 2a, reference A1, A2 identify pixels having brightness values different from each other.

The apparatus 1 further comprises at least a first memory 150 wherein a first threshold TH1 for said brightness values is stored.

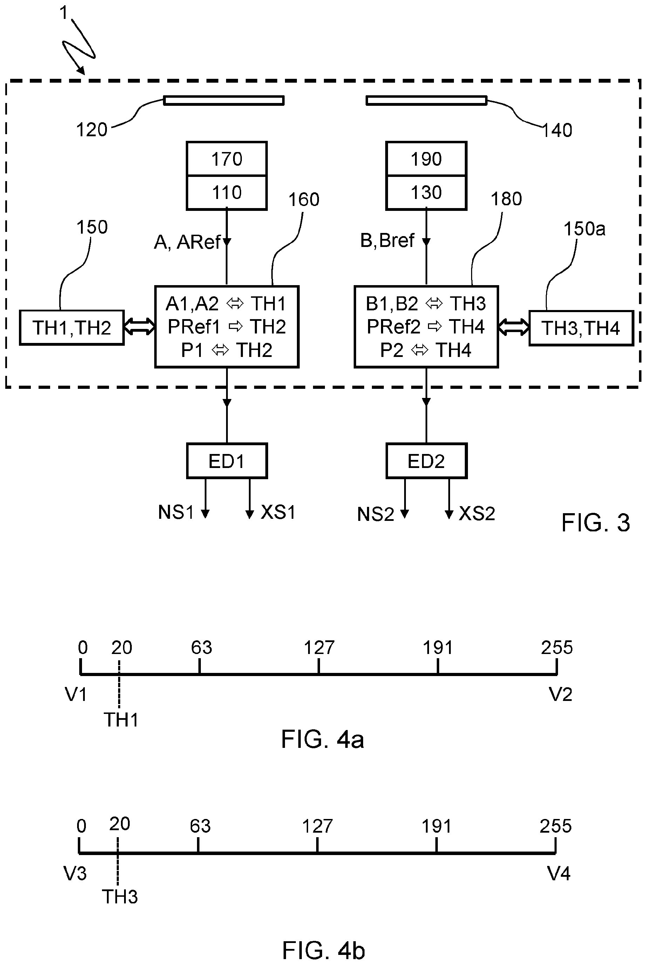

The first threshold TH1 is defined within a first linear scale of brightness values (figure 4a).

The first scale is comprised between a first value V1 and a second value V2.

The first value V1 corresponds to a null brightness value; preferably the first value V1 coincides with said null brightness value.

The second value V2 corresponds to a maximum brightness value; preferably the second value V2 coincides with said maximum brightness value.

The absolute value of the difference between the first value V1 and the second value V2 defines the amplitude of the first scale.

The absolute value of the difference between the first threshold TH1 and the first value V1 is comprised between about 5% and about 20% of the amplitude of the first scale.

Figure 4a shows schematically a first scale of brightness values, wherein the first value V1 is equal to zero, the second value V2 is equal to 255 and the first threshold TH1 is placed, by way of example, at 20.

In figure 2a, the reference A1 identify the pixels having brightness values lower than the first threshold TH1, while the reference A2 identifies the pixels having brightness values higher than the first threshold TH1.

It has to be noted that, in figure 2a, the reference A1 is associated only to some pixels for the sake of simplicity; reference A1 intends to identify all the pixels or pixel groups associated with brightness values lower than the first threshold TH1.

The apparatus 1 comprises a first processing unit 160, associated to at least the first detection device 110 and to the first memory 150 (figures 1, 3).

The first processing unit 160 is configured to perform a first comparison between the brightness values associated to said portions A1, A2 of the first image A and the first threshold TH1.

As a function of such first comparison, the first processing unit 160 is configured to determine a first operating parameter P1 representative of an overall area occupied in the first image A by the first portions A1 associated to a lower brightness value than the first threshold TH1.

In practical terms, the first operating parameter P1 expresses to which extent dark areas are present in the first image A.

The first processing unit 160 is configured to compare the first operating parameter P1 with a second threshold TH2.

The second threshold TH2 is represented by the minimum acceptable area overall occupied by the portions of the first image A having a lower brightness than the first threshold TH1.

By way of example, the second threshold TH2 can be defined in terms of percentage ratio between the area occupied by the pixels that are sufficiently dark (namely having brightness lower than the first threshold TH1) and the overall area of the first image A. The second threshold TH2 is appropriately set as a function of the dimensions of the first image A and of the part of the first image A occupied by the representation of the semi-finished product 10.

By placing the first detection device 110 at a distance comprised between about 100 mm and about 300 mm from the semi-finished product 10, the second threshold TH2 can be, for example, comprised between about 85% and about 95%.

In an embodiment, the second threshold TH2 can be determined in an at least partially automated way.

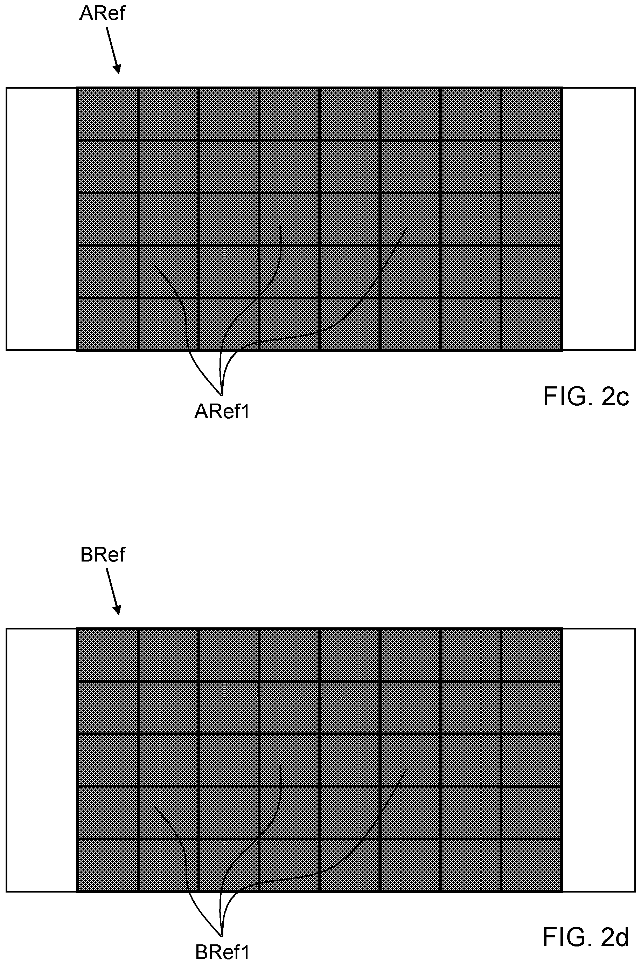

In particular, a first reference image ARef can be arranged (figure 2c), representative of a portion of semi-finished product 10 substantially devoid of residues or foreign bodies. The first reference image ARef can be created artificially, for example by means of software programmes for graphical processing, or it can be detected by means of the first detection device 110. In this second case, a portion of semi-finished product totally devoid of residues or foreign bodies is accurately selected.

The first reference image ARef comprises a plurality of first reference portions ARefl. Each first reference portion ARefl is associated to a respective brightness value. Advantageously, the brightness value of each one of the first reference portions ARefl is compared with said first threshold TH1.

By means of this comparison, a first reference parameter PRef1 is determined, representative of the overall area occupied in said first reference image ARef by the first reference portions ARefl associated to a lower brightness value than the first threshold TH1.

On the basis of the first reference parameter PRef1, the second threshold TH2 can thus be determined.

In practical terms, the first reference parameter PRef1 represents how wide the area occupied by dark pixels has to be in the case of an ideal or anyway optimal portion of semi-finished product.

By calculating the ratio between such area and the overall area of the first reference image, ARef, it is thus possible to determine the optimal percentage of dark pixels in the first image A. As a function of such percentage it is finally possible to determine the second threshold TH2.

By way of example, the second threshold TH2 can be to some extent lower than the optimal percentage identified on the basis of the first reference parameter PRef1, in order to avoid that possible non-idealities and imperfections of the system, or simply small areas with a higher brightness than the average, anyway irrelevant for the quality of the semi-finished product, can distort the results of the analysis performed by the apparatus 1.

It has to be noted that, preferably, the first reference image ARef and the first image A have the same dimensions, and the semi-finished product 10 is represented in the two images with the same proportions, namely, for example, according to the same enlargement or reduction scale.

By way of example, in case the first reference image ARef is detected by the first detection device 110, the latter is positioned at a distance from the semi-finished product equal to the distance where the first detection device 110 itself detects the first image A. The optics of the first detection device 110 is preferably configured in the same way in both cases, in order to keep the homogeneity in terms of enlargement/reduction of the semi-finished product shown.

As said, the first processing unit 160 is configured to compare the first operating parameter P1 with the second threshold TH2.

As a function of said comparison, the first processing unit 160 causes the generation of a first notification signal NS1.

Preferably, the first processing unit 160 causes the generation of a first notification signal NS1 if the first operating parameter P1 is lower than the second threshold TH2. In practice, the fact that the first image A does not have, overall, a sufficiently large dark area is ascribed to the presence of portions of adhesive tape and/or of residues of service fabric, and, consequently, the first notification signal NS1 is generated.

The first notification signal NS1 has the aim to inform of the situation the operator in charge of controlling the plant. The operator will thus be able to intervene, for example by removing the portions of adhesive tape and/or the residues of service fabric present on the semi-finished product.

In an embodiment, the first processing unit 160 directly generates the first notification signal NS1, so as to alert the operator in charge in an acoustic and/or visual way.

In a different embodiment, the first processing unit 160 cooperates with at least a first external device ED1 separated by the latter, such as for example a PLC, with the function of controlling the apparatus 1 and possibly other apparatuses and/or other stations forming part of the plant. In this case, the first processing unit 160 outputs a piece of information representative of the fact that the first operating parameter P1 is lower than the second threshold TH2. The first external device ED1, following the reception of such information, generates the first notification signal NS1.

Preferably, the at least a first image A is detected while the semi-finished product 10 is unwound from the aforementioned reel 20.

Preferably, if the first parameter P1 is lower then the second threshold TH2, the first processing unit 160 causes the generation of a first interruption signal XS1 to deactivate one or more of the actuators 40.

Thus the movement of the semi-finished 10 product is stopped and a possible intervention of the operator is facilitated.

Also the first interruption signal XS1 can be generated directly by the first processing unit 160, or it can be generated by the first external device ED1 which the first processing unit 160 cooperates with. In particular, such first external device ED1, once it receives the information relating to the fact that the first parameter P1 is lower than the second threshold TH2, can generate both the first notification signal NS1 and the first interruption signal XS1.

Preferably the apparatus 1 comprises also at least a first emitting device 170, positioned on the same side of the semi-finished product 10 with respect to the first detection device 110.

As it can be schematically shown in figure 1, the first detection device 110 and the first emitting device 170 face a first surface 10a of the semi-finished product 10.

The first emitting device 170 is configure to send an electromagnetic radiation to at least the semi-finished product 10 in order to allow or to facilitate the detection of said first detection device 110.

Preferably, the radiation sent by the first emitting device 170 is a light radiation in the visible spectrum, for example obtained by means of one or more LED emitters E1-E8 appropriately configured and power supplied.

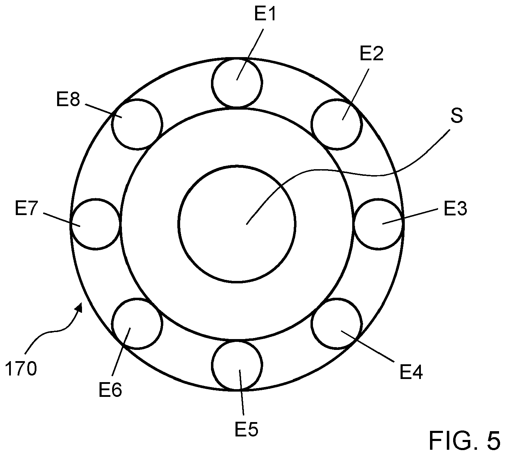

By way of example, the first emitting device 170 can be of the crown-shaped type (figure 5); the sensor S of the first detection device 110 can be advantageously positioned in a central area, around which the emitters E1-E8 are arranged circumferentially.

Preferably, in order to maximize the quality of the detection performed by the first detection device 110, the apparatus 1 comprises at least a first background wall 120 positioned on the opposite side from the semi-finished product 10 with respect to the first detection device 110. In other words, the semi-finished product 10 is placed between the first detection device 110 and the first background wall 120.

The function of the background wall 120 is to facilitate the detection of the first image A; in particular, the first background wall 120 is such that the portions AX of the first image A which reproduce the first background wall 120 itself, are associated to higher brightness values than the first threshold TH1. Thus the first background wall 120 does not interfere negatively with the determination of the first operating parameter P1, and, on the contrary, it provides an appropriate contrast for the precise identification of the portions A1.

In practical terms, the first emitting device 170 lights the portion of semi-finished product 10 that has to be detected by the first detection device 110, and possibly the first background wall 120 (if present). Thus the first detection device 110 detects the corresponding reflected radiation, as to define the first image A.

In a preferred embodiment, the apparatus 1 comprises also a second detection device 130 facing a second surface 10b, opposite to the aforementioned first surface 10a of the semi-finished product 10.

Preferably the second detection device 130 is placed along the path P followed by the semi-finished product 10, in a different position from the first detection device 110. The second detection device 130 may comprise a sensor or photosensitive element, able to convert the received light radiation into an electric signal, ad the circuitry necessary to make such electric signal usable by other devices/apparatuses, which will be described more in detail in the following.

By way of example, the sensor can be of the CMOS type.

However, sensors of other types may also be used, provided that they have appropriate functional characteristics.

In an embodiment, the second detection device 130 may comprise or be associated to a polarizer filter.

Preferably, the second detection device 130 has substantially the same structural and functional characteristics as the ones of the first detection device 110.

The second detection device 130 is adapted to detect a second image B of the semi-finished product 10.

Preferably the second image B is a monochromatic image.

Similarly to the first image A, the second image B is formed by a plurality of second portions B1, B2, each one of them associated to a respective brightness value (figure 2b).

The second detection device 130 is associated to a second processing unit 180 (figures 1, 3).

The second processing unit 180 is configured to compare the brightness values of the second portions B1, B2 with a third threshold TH3.

The third threshold TH3 is defined within a second linear scale of brightness values (figure 4b).

The second scale is comprised between a third value V3 and a fourth value V4.

The third value V3 corresponds to a null brightness value; preferably the third value V3 coincides with said null brightness value.

The fourth value V4 corresponds to a maximum brightness value; preferably the fourth value V4 coincides with said maximum brightness value.

The absolute value of the difference between the third value V3 and the fourth value V4 defines the amplitude of the second scale.

The absolute value of the difference between the third threshold TH3 and the third value V3 is comprised between about 5% and about 20% of the amplitude of the second scale.

Preferably, the third threshold TH3 coincides with the first threshold TH1.

Preferably the third value V3 coincides with the first value V1 and the fourth value V4 coincides with the second value V2; in particular, the second scale may coincide with the first scale.

In a different embodiment, the third threshold TH3 does not coincide with the first threshold TH1. The first and the second scale, together with the respective first, second, third and fourth value V1-V4 can be different from each other.

In the case wherein the first and the third threshold TH1, TH3 do not coincide, the third threshold TH3 can be stored in a second memory 150a.

The second processing unit 180, as a function of the comparison between the brightness values of the second portions B1, B2 and the third threshold TH3, determines a second operating parameter P2.

The second operating parameter P2 is representative of an overall area occupied in said second image B by the second portions B1 associated to a lower brightness value than the third threshold TH3.

The first processing unit 180 is configured to compare the second operating parameter P2 with a fourth threshold TH4.

Preferably the fourth threshold TH4 is representative by the minimum acceptable area overall occupied by the portions of the second image B having a lower brightness than the third threshold TH3.

By way of example, the fourth threshold TH4 can be defined in terms of percentage ratio between the area occupied by the pixels that are sufficiently dark (namely having brightness lower than the third threshold TH3) and the overall area of the second image B.

Preferably, the fourth threshold TH4 coincides with the second threshold TH2.

In a different embodiment, the fourth threshold TH4 is calculated irrespective of the second threshold TH2.

The operations carried out for calculating the fourth threshold TH4 can be substantially the same as the ones carried out for calculating the second threshold TH2. The differences may consist of, for example, a different device used (second detection device 130 instead of first detection device 110), in a different surface of the semi-finished product taken as reference (second surface 10b, instead of the first surface 10a), in different lighting conditions in which the reference images are detected, etc.. To sum up, a second reference image BRef is detected (by means of the second detection device 130) or generated in another way, comprising second reference portions BRef1 (figure 2d); by comparing the brightness of the second reference portions BRef1 with the third threshold TH3, a second reference parameter PRef2 is determined, representative of the extension of the area occupied by dark pixels in case of an ideal or anyway optimal portion of semi-finished product; the fourth threshold TH4 is calculated as a function of such second reference parameter PRef2.

As a function of a comparison between said second operating parameter P2 and said fourth threshold TH4, the second processing unit 180 causes the generation of a second notification signal NS2.

Preferably, the second processing unit 180 causes the generation of said second notification signal NS2 if the second operating parameter P2 is lower than the fourth threshold TH4.

The second notification signal NS2 has preferably the same characteristics as the first notification signal NS1.

The second notification signal NS2 has the function of alerting an operator so that the latter can intervene to remove residues of service fabric and/or of adhesive tape present on the second surface 10b of the semi-finished product 10.

Similarly to the first notification signal NS1, also the second notification signal NS2 can be generated directly by the second processing unit 180, or it can be generated by a second external device ED2 which the second processing unit 180 cooperates with. In particular, the second processing unit 180 may provide the information relating to the fact that the second operating parameter P2 is lower than the fourth threshold TH4 to the second external device ED2; the second external device ED2 may then generate the second notification signal NS2.

Preferably the first and the second external device ED1, ED2 are formed as a single apparatus, for example in the form of a PLC as indicated above.

Preferably, the second processing unit 180 is configured to cause the generation of a second interruption signal XS2 in order to deactivate one or more of the actuators 40, so as to temporarily stop the unwinding and/or the movement of the semi-finished product 10 and thus to allow/facilitate the intervention of the operator in charge.

Also the second interruption signal XS2 can be generated directly by the second processing unit 180, or it can be generated by the second external device ED2 following an appropriate input provided by the second processing unit 180.

In the preferred embodiment, after having received the information relating to the fact that the second operating parameter P1 is lower than the fourth threshold TH4, the second external device ED2 generates both the second notification signal NS2 and the second interruption signal XS2.

Preferably the apparatus 1 comprises also a second emitting device 190, positioned on the same side of the semi-finished product 10 with respect to the second detection device 130.

As schematically shown in figure 1, the second emitting device 190 faces the second surface 10b of the semi-finished product 10.

The second emitting device 190 is configured to send an electromagnetic radiation to at least the semi-finished product 10 in order to allow or to facilitate the detection by said second detection device 130.

Preferably, the radiation emitted by the second emitting device 190 is a light radiation in the visible spectrum, for example obtained by means of one or more LEDs appropriately configured and power supplied.

By way of example, the second emitting device 190 can be of crown-shaped type; the sensor of the second detection device 130 can be advantageously positioned in a central area of said crown. In practice, the second emitting device 190 can be shaped in the same way as the one schematically shown in figure 5 with reference to the first emitting device 170.

Preferably, the second emitting device 190 has substantially the same structural and functional characteristics as the ones of the first emitting device 170.

Preferably, in order to maximize the quality of the detection performed by the second detection device 130, the apparatus 1 comprises at least a second background wall 140 positioned on the opposite side of the semi-finished product 10 with respect to the second detection device 130. In other words, the semi-finished product 10 is placed between the second detection device 130 and the second background wall 140.

The function of the second background wall 140 is to facilitate the detection of the second image B; in particular, the second background wall 140 is such that the portions BX of the second image B which reproduce the second background wall 140 itself, are associated to higher brightness values than the third threshold TH3. Thus the second background wall 140 does not interfere negatively with the determination of the second operating parameter PI, and, on the contrary, it provides an appropriate contrast for the precise identification of the portions B1.

In an embodiment, the apparatus 1 can be provided with an appropriate alignment system (not shown) which, preferably in cooperation with the aforementioned one or more rollers, keeps the semi-finished product 10 facing the first and/or the second detection device 110, 130, so that the detection of the first and/or the second image A, B and the subsequent analysis can be performed in a precise and correct way.

It has to be noted that the first and the second processing unit 160, 180 are described separately only for the sake of clarity.

In an embodiment they can be made as a single electronic device, appropriately programmed so as to perform the operations that are described and claimed herein. Such single electronic device can be formed by or be operatively associated to a PLC, which supervises the functioning of the apparatus 1 and possibly of other parts of the plant.

In a different embodiment, the first and the second processing unit 160, 180 can be made as distinct electronic devices. By way of example, each electronic unit 160, 180 can be partially or fully integrated in a video camera or a digital telecamera, further comprising at least the respective detection device 110, 130.

In practical terms, such type of telecamera or video camera can be structured and programmed so as to generate as output at least the information relating to the fact that the first/second operating parameter PI, P2 is lower than the second/fourth threshold TH2, TH4. Such information, appropriately provided to the first/second external device ED1, ED2, allow then the generation of the first/second notification signal NS1, NS2 and possibly of the first/second interruption signal XS1, XS2. As said, the first external device ED1 and the second external device ED2 can be formed by a single device/apparatus, preferably integrated in the aforementioned PLC.

In the light of what said above, in accordance with the present invention, the following operations are performed.

First of all, the first image A is detected.

Then a first comparison is performed between the brightness value of the first portions A1, A2 of the first image A and the first threshold TH1.

As a function of such first comparison, the first operating parameter P1 is determined, representative of an overall area occupied in the first image A by the first portions A1 associated to a lower brightness value than the first threshold TH1.

A second comparison is then performed between the first operating parameter P1 and the second threshold TH2.

As a function of the aforementioned comparison, the generation of the first notification signal NS1 is caused.

Preferably the generation of the first notification signal NS1 is caused if the first operating parameter P1 is lower than the second threshold TH2.

Preferably if the first operating parameter P1 is lower than the second threshold TH2, the generation of the first interruption signal XS1 is also caused.

Preferably, in order to allow or to facilitate the detection of the first image A, an electromagnetic radiation is sent on the semi-finished product 10, for example having a wavelength comprised in the range of the visible radiations.

Preferably, the aforementioned first background wall 120 is arranged, so that the semi-finished product 10 is placed between said first background wall 120 and the first detection device 110 used for detecting the first image A.

Preferably, also the second image B, representative of the semi-finished product 10, can be detected.

Then a third comparison is performed between the brightness value of the second portions B1, B2 of the second image B and the third threshold TH3.

As a function of such third comparison, the second operating parameter P2 is determined, representative of an overall area occupied in the second image B, by the second portions B1 associated to a lower brightness value than the third threshold TH3. A fourth comparison is then performed between the second operating parameter P2 and the fourth threshold TH4.

As a function of the aforementioned fourth comparison, the generation of the second notification signal NS2 is caused.

Preferably the generation of the second notification signal NS2 is caused if the second operating parameter P2 is lower than the fourth threshold TH4.

Furthermore, if the second operating parameter P2 is lower than the fourth threshold TH4, the generation of the second interruption signal XS2 is preferably caused. Preferably, in order to allow or to facilitate the detection of the second image B, an electromagnetic radiation is sent on the semi-finished product 10, for example having a wavelength comprised in the range of the visible radiations.

Preferably, the aforementioned second background wall 140 is arranged so that the semi-finished product 10 is placed between said second background wall 140 and the second detection device 130 used for detecting the second image B.

It has to be noted that, so far, reference was made to one single image A and one single image B, representative of a portion of the first and of the second surface 10a, 10b, respectively, of the semi-finished product 10. The invention, however, provides that a succession of first images A and, preferably, a succession of second images B is detected, so as to examine in a thorough way the semi-finished product 10 itself. In particular, the detection of the first images A and, preferably, of the second images B is set also on the basis of the speed of movement/scrolling of the semi-finished product 10, so as to avoid that parts of the semi-finished product 10 are not included in the first and/or in the second images A, B and thus cannot be analyzed in accordance with the invention.

By way of example, the first and/or the second detection device 110, 130 can use an exposure time comprised between about 0.95 ms and about 1.05 ms. The average processing time for each image is comprised between about 8 ms and 12 ms. The scrolling speed of the semi-finished product 10 can be comprised between about 1.5 m/s and about 2.5 m/s.

Assuming a processing time equal to 11 ms, it is possible to process 90.9 images per second, assuming also a scrolling speed equal to 2 m/s, the adjustment of the distance between the videocamera and the semi-finished product will have to be set so that the length of the semi-finished product included in each image is about 22 mm. The distance between videocamera and semifinished product is also a function of the focal length of the lens used. By changing the lens, the distance of the videocamera will have to be adjusted so that the length of the semi-finished product framed is always of 22 mm.

Setting the system in a different way, with a scrolling speed equal to about 1.8 m/s, the other parameters being the same, it is possible to adjust the distance of the videocamera so as to frame an image of about 20 mm.

## Claims

1. A method to control manufacturing and feeding of semi-finished products in a tyre building process, said method comprising:
a. detecting at least a first image (A) representative of a semi-finished product (10) wherein said first image (A) is formed by a plurality of first portions (A1, A2), each one associated to a respective brightness value;
b. defining a first threshold (TH1) for said brightness values;
c. performing a first comparison between the brightness value of said first portions (A1, A2) and said first threshold (TH1);
d. as a function of said first comparison, determining a first operating parameter (P1) representative of an overall area occupied in said first image (A) by the first portions (A1) associated to a brightness value lower than said first threshold (TH1);
e. performing a second comparison between said first operating parameter (P1) and a second threshold (TH2), wherein the second threshold (TH2) is represented by the minimum acceptable area overall occupied by the portions of the first image (A) having a lower brightness than the first threshold (TH1);
f. causing the generation of a first notification signal (NS1) as a function of said second comparison
wherein, in a first linear scale of brightness values, defined between a first value (V1) corresponding to a null value of brightness and a second value (V2) corresponding to a maximum value of brightness, wherein the absolute value of the difference between said first value (V1) and said second value (V2) defines an amplitude of said first linear scale, said first threshold (TH1) is defined in relation to said first linear scale, said first threshold (TH1) is such that the absolute value of the difference between said first threshold (TH1) and said first value (V1) is comprised between 5% and 20% of the amplitude of said first linear scale, wherein said at least a first image (A) is detected while said semi-finished product (10) is unwound from a reel (20) and moved along a path (P) towards a building station (30) for building elementary semi-finished products, made from said semi-finished product (10).

2. A method according to claim 1, wherein said first operating parameter (P1) is representative of an overall area occupied in said first image (A) by the first portions (A1) associated to a brightness value lower than said first threshold (TH1).

3. A method according to claim 1 or 2, wherein said first notification signal (NS1) is generated if said first operating parameter (P1) is lower than said second threshold (TH2).

4. A method according to claim 3, comprising causing the generation, if said first operating parameter (P1) is lower than said second threshold (TH2), of a first interruption signal (XS1) to deactivate one or more actuators (40) which promote the unwinding of said semi-finished product (10) from said reel (20) and/or its movement towards said building station (30).

5. A method according to any one of the preceding claims, comprising:
g. arranging a first reference image (ARef) representative of a portion of semi-finished product substantially devoid of residues or foreign bodies, said first reference image (ARef) being formed by a plurality of first reference portions (ARefl), each one associated to a respective brightness value;
h. comparing the brightness values of said first reference portions (ARefl) with said first threshold (TH1);
i. determining a first reference parameter (PRef1) representative of an overall area occupied in said first reference image (ARef) by the first reference portions associated to a brightness value lower than said first threshold (TH1);
l. determining said second threshold (TH2) as a function of said first reference parameter (PRef1).

6. A method according to any one of the preceding claims, wherein said first image (A) is representative of a portion of a first surface (10a) of said semi-finished product (10), said method comprising:
a1. detecting a second image (B) representative of a portion of a second surface of said semi-finished product (10), opposite to said first surface (10a), said second image (B) being formed by a plurality of second portions (B1, B2), each one associated to a respective brightness value;
b1. defining a third threshold (TH3) for said brightness values;
c1. performing a third comparison between the brightness value of said second portions (B1, B2) and said third threshold (TH3);
d1. as a function of said third comparison, determining a second operating parameter (P2) representative of an overall area occupied in said second image (B) by the second portions (B1) associated to a brightness value lower than said third threshold (TH3);
e1. performing a fourth comparison between said second operating parameter (P2) and a fourth threshold (TH4);
f1. causing the generation of a second notification signal (NS2) as a function of said fourth comparison.
wherein, in a second linear scale of brightness values, defined between a third value (V3) corresponding to a null value of brightness and a fourth value (V4) corresponding to a maximum value of brightness, wherein the absolute value of the difference between said third value (V3) and said fourth value (V4) defines an amplitude of said second linear scale, said third threshold (TH3) is defined in relation to said second linear scale, said third threshold (TH3) is such that the absolute value of the difference between said third threshold (TH3) and said third value (V3) is comprised between 5% and 20% of the amplitude of said second linear scale.

7. A method according to claim 6, wherein said second operating parameter (P2) is representative of an overall area occupied in said second image (B) by the second portions (B1) associated to a brightness value lower than said third threshold (TH3).

8. A method according to claim 7, wherein said second notification signal (NS2) is generated if said second operating parameter (P2) is lower than said fourth threshold (TH4).

9. An apparatus to control manufacturing and feeding of semi-finished products in a tyre building process, said apparatus comprising:
a reel (20), on which a semi-finished product (10) is wound;
a building station (30), for building elementary semi-finished products, made from said semi-finished product (10);
one or more actuators (40) configured to unwind the semi-finished product (10) from the reel (20) and move said semi-finished product (10) toward the building station (30) along a path (P);
said apparatus (1) further comprising:
a. at least a first detection device (110) positioned along said path (P) and configured to detect at least a first image (A) representative of a semi-finished product (10) wherein said first image (A) is formed by a plurality of first portions (A1, A2), each one associated to a respective brightness value;
b. at least a first memory (150) wherein a first threshold (TH1) for said brightness values is stored;
c. at least a first processing unit (160), associated to said first detection device (110) and to said memory (150) and configured to:
i. perform a first comparison between the brightness value of said first portions (A1, A2) and said first threshold (TH1);
ii. as a function of said first comparison, determine a first operating parameter (PI) representative of an overall area occupied in said first image (A) by the first portions (A1) associated to a brightness value lower than said first threshold (TH1);
iii. perform a second comparison between said first operating parameter (P1) and a second threshold (TH2), wherein the second threshold (TH2) is represented by the minimum acceptable area overall occupied by the portions of the first image (A) having a lower brightness than the first threshold (TH1);
iv. cause the generation of a first notification signal (NS1) as a function of said second comparison
wherein, in a first linear scale of brightness values, defined between a first value (V1) corresponding to a null value of brightness and a second value (V2) corresponding to a maximum value of brightness, wherein the absolute value of the difference between said first value (V1) and said second value (V2) defines an amplitude of said first linear scale, said first threshold (TH1) is defined in relation to said first linear scale, said first threshold (TH1) is such that the absolute value of the difference between said first threshold (TH1) and said first value (V1) is comprised between 5% and 20% of the amplitude of said first linear scale.

10. An apparatus according to claim 9, wherein said first operating parameter (P1) is representative of an overall area occupied in said first image (A) by the first portions (A1) associated to a brightness value lower than said first threshold (TH1).

11. An apparatus according to claim 9 or 10, wherein said first notification signal (NS1) is generated if said first operating parameter (P1) is lower than said second threshold (TH2).

12. An apparatus according to any one of the claims from 9 to 11, wherein said first detection device (110) is facing a first surface (10a) of said semi-finished product (10), said apparatus (1) comprising:
a1. a second detection device (130) facing a second surface (10b) of said semi-finished product (10), opposite to said first surface (10a), said second detection device (130) being adapted to detect a second image (B) representative of a portion of the second surface (10b) of said semi-finished product (10), said second image (B) being formed by a plurality of second portions (B1, B2), each one associated to a respective brightness value;
b1. a second memory (150b) configured to store a third threshold (TH3);
c1. a second processing unit (180), associated to said second detection device (130) and configured to:
i'. perform a third comparison between the brightness value of said second portions (B1, B2) and said third threshold (TH3);
ii'. as a function of said third comparison, determining a second operating parameter (P2) representative of an overall area occupied in said second image (B) by the second portions (B1) associated to a brightness value lower than said third threshold (TH3);
iii'. perform a fourth comparison between said second operating parameter (P2) and a fourth threshold (TH4);
iv'. if said second operating parameter (P2) is lower than said fourth threshold (TH4), cause the generation of a second notification signal (NS2) as a function of said fourth comparison.
wherein, in a second linear scale of brightness values, defined between a third value (V3) corresponding to a null value of brightness and a fourth value (V4) corresponding to a maximum value of brightness, wherein the absolute value of the difference between said third value (V3) and said fourth value (V4) defines an amplitude of said second linear scale, said third threshold (TH3) is defined in relation to said second linear scale, said third threshold (TH3) is such that the absolute value of the difference between said third threshold (TH3) and said third value (V3) is comprised between 5% and 20% of the amplitude of said second linear scale.

13. An apparatus according to claim 12, wherein said second operating parameter (P2) is representative of an overall area occupied in said second image (B) by the second portions (B1) associated to a brightness value lower than said third threshold (TH3).

14. An apparatus according to claim 12 or 13, wherein said second notification signal (NS2) is generated if said second operating parameter (P2) is lower than said fourth threshold (TH4).

## Patentansprüche

1. Verfahren zur Steuerung der Herstellung und Zufuhr von halbfertigen Produkten in einem Reifenfertigungsverfahren, wobei das Verfahren umfasst:
a. Erfassen zumindest eines ersten Bilds (A), das ein halbfertiges Produkt (10) darstellt, wobei das erste Bild (A) aus einer Vielzahl von ersten Abschnitten (A1, A2) gebildet wird, die jeweils einem Helligkeitswert zugeordnet sind;
b. Definieren einer ersten Schwelle (TH1) für die Helligkeitswerte;
c. Durchführen eines ersten Vergleichs zwischen dem Helligkeitswert der ersten Abschnitte (A1, A2) und der ersten Schwelle (TH1);
d. Bestimmen, als eine Funktion des ersten Vergleichs, eines ersten Betriebsparameters (P1), der eine Gesamtfläche darstellt, die in dem ersten Bild (A) von den ersten Abschnitten (A1) belegt wird, die einem Helligkeitswert zugeordnet sind, der geringer als die erste Schwelle (TH1) ist;
e. Durchführen eines zweiten Vergleichs zwischen dem ersten Betriebsparameter (P1) und einer zweiten Schwelle (TH2), wobei die zweite Schwelle (TH2) durch die minimale annehmbare Gesamtfläche dargestellt wird, die von den Abschnitten des ersten Bilds (A) belegt wird, die eine geringere Helligkeit als die erste Schwelle (TH1) aufweisen;
f. Veranlassen der Erzeugung eines ersten Benachrichtigungssignals (NS1) als eine Funktion des zweiten Vergleichs,
wobei in einer ersten linearen Skala von Helligkeitswerten, definiert zwischen einem Wert (V1) entsprechend einem Nullwert der Helligkeit und einem zweiten Wert (V2) entsprechend einem maximalen Wert der Helligkeit, wobei der absolute Wert der Differenz zwischen dem ersten Wert (V1) und dem zweiten Wert (V2) eine Amplitude der ersten linearen Skala definiert, die erste Schwelle (TH 1) in Bezug auf die erste lineare Skala definiert ist, die erste Schwelle (TH1) derart ist, dass der absolute Wert der Differenz zwischen der ersten Schwelle (TH1) und dem ersten Wert (V1) zwischen 5 % und 20 % der Amplitude der ersten linearen Skala liegt,
wobei das zumindest eine erste Bild (A) erfasst wird, während das halbfertige Produkt (10) von einer Rolle (20) abgewickelt und entlang eines Pfads (P) zu einer Fertigungsstation (30) zur Fertigung von elementaren halbfertigen Produkten, die aus dem halbfertigen Produkt (10) hergestellt werden, bewegt wird.

2. Verfahren nach Anspruch 1, wobei der erste Betriebsparameter (P1) eine Gesamtfläche darstellt, die in dem ersten Bild (A) von den ersten Abschnitten (A1) belegt wird, die einem Helligkeitswert zugeordnet sind, der geringer als die erste Schwelle (TH1) ist.

3. Verfahren nach Anspruch 1 oder 2, wobei das erste Benachrichtigungssignal (NS1) erzeugt wird, wenn der erste Betriebsparameter (P1) geringer als die zweite Schwelle (TH2) ist.

4. Verfahren nach Anspruch 3, umfassend die Veranlassung der Erzeugung eines ersten Unterbrechungssignals (XS1), um ein oder mehrere Stellglieder (40), die das Abwickeln des halbfertigen Produkts (10) von der Rolle (20) und/oder seine Bewegung zu der Fertigungsstation (30) hin bewirken, zu deaktivieren, wenn der erste Betriebsparameter (P1) geringer als die zweite Schwelle (TH2) ist.

5. Verfahren nach einem der vorhergehenden Ansprüche, umfassend die folgenden Schritte:
g. Anordnen eines Referenzbilds (ARef), das einen Abschnitt des halbfertigen Produkts im Wesentlichen frei von Rückständen oder Fremdkörpern darstellt, wobei das erste Referenzbild (ARef) aus einer Vielzahl von ersten Referenzabschnitten (ARefl) gebildet wird, die jeweils einem Helligkeitswert zugeordnet sind;
h. Vergleichen der Helligkeitswerte der ersten Referenzabschnitte (ARefl) mit der ersten Schwelle (TH 1);
i. Bestimmen eines ersten Referenzparameters (Pref1), der eine Gesamtfläche darstellt, die in dem ersten Referenzbild (ARef) von den ersten Referenzabschnitten belegt wird, die einem Helligkeitswert zugeordnet sind, der geringer als die erste Schwelle (TH1);
l. Bestimmen der zweiten Schwelle (TH2) als eine Funktion des ersten Referenzparameters (PRef1).

6. Verfahren nach einem der vorhergehenden Ansprüche, wobei das erste Bild (A) einen Abschnitt einer ersten Oberfläche (10a) des halbfertigen Produkts (10) darstellt, wobei das Verfahren umfasst:
a1. Erfassen eines zweiten Bilds (B), das einen Abschnitt einer zweiten Oberfläche des halbfertigen Produkts (10), die der ersten Oberfläche (10a) gegenüberliegt, darstellt, wobei das zweite Bild (B) aus einer Vielzahl von zweiten Abschnitten (B1, B2) gebildet ist, die jeweils einem Helligkeitswert zugeordnet sind;
b1. Definieren einer dritten Schwelle (TH3) für die Helligkeitswerte;
c1. Durchführen eines dritten Vergleichs zwischen dem Helligkeitswert der zweiten Abschnitte (B1, B2) und der dritten Schwelle (TH3);
d1. Bestimmen, als eine Funktion des dritten Vergleichs, eines zweiten Betriebsparameters (P2), der eine Gesamtfläche darstellt, die in dem zweiten Bild (B) von den zweiten Abschnitten (B1) belegt wird, die einem Helligkeitswert zugeordnet sind, der geringer als die dritte Schwelle (TH3) ist;
e1. Durchführen eines vierten Vergleichs zwischen dem zweiten Betriebsparameter (P2) und einer vierten Schwelle (TH4);
f1. Veranlassen der Erzeugung eines zweiten Benachrichtigungssignals (NS2) als eine Funktion des vierten Vergleichs,
wobei in einer zweiten linearen Skala von Helligkeitswerten, definiert zwischen einem dritten Wert (V3) entsprechend einem Nullwert der Helligkeit und einem vierten Wert (V4) entsprechend einem maximalen Wert der Helligkeit, wobei der absolute Wert der Differenz zwischen dem dritten Wert (V3) und dem vierten Wert (V4) eine Amplitude der zweiten linearen Skala definiert, die dritte Schwelle (TH3) in Bezug auf die zweite lineare Skala definiert ist, die dritte Schwelle (TH3) derart ist, dass der absolute Wert der Differenz zwischen der dritten Schwelle (TH3) und dem dritten Wert (V3) zwischen 5 % und 20 % der Amplitude der zweiten linearen Skala liegt.

7. Verfahren nach Anspruch 6, wobei der zweite Betriebsparameter (P2) eine Gesamtfläche darstellt, die in dem zweiten Bild (B) von den zweiten Abschnitten (B1) belegt wird, die einem Helligkeitswert zugeordnet sind, der geringer als die dritte Schwelle (TH3) ist.

8. Verfahren nach Anspruch 7, wobei das zweite Benachrichtigungssignal (NS2) erzeugt wird, wenn der zweite Betriebsparameter (P2) geringer als die vierte Schwelle (TH4) ist.

9. Vorrichtung zur Steuerung der Herstellung und Zufuhr von halbfertigen Produkten in einem Reifenfertigungsverfahren, wobei die Vorrichtung umfasst:
eine Rolle (20), auf welche ein halbfertiges Produkt (10) aufgewickelt ist;
eine Fertigungsstation (30) zur Fertigung von elementaren halbfertigen Produkten, die aus dem halbfertigen Produkt (10) hergestellt sind;
ein oder mehrere Stellglieder (40), die dazu ausgestaltet sind, das halbfertige Produkt (10) von der Rolle (20) abzuwickeln und das halbfertige Produkt (10) zu der Fertigungsstation (30) hin entlang eines Pfads (P) zu bewegen;
wobei die Vorrichtung (1) ferner umfasst:
a. zumindest eine erste Erfassungseinrichtung (110), die entlang des Pfads (P) positioniert und dazu ausgestaltet ist, zumindest ein erstes Bild (A) zu erfassen, das ein halbfertiges Produkt (10) darstellt, wobei das erste Bild (A) aus einer Vielzahl von ersten Abschnitten (A1, A2) gebildet wird, die jeweils einem Helligkeitswert zugeordnet sind;
b. zumindest einen ersten Speicher (150), in welchem eine erste Schwelle (TH1) für die Helligkeitswerte gespeichert ist;
c. zumindest eine erste Verarbeitungseinheit (160), die der ersten Erfassungseinrichtung (110) und dem Speicher (150) zugeordnet und dazu ausgestaltet ist:
i. einen ersten Vergleich zwischen dem Helligkeitswert der ersten Abschnitte (A1, A2) und der ersten Schwelle (TH1) durchzuführen;
ii. als eine Funktion des ersten Vergleichs einen ersten Betriebsparameter (P1) zu bestimmen, der eine Gesamtfläche darstellt, die in dem ersten Bild (A) von den ersten Abschnitten (A1) belegt wird, die einem Helligkeitswert zugeordnet sind, der geringer als die erste Schwelle (TH1) ist;
iii. einen zweiten Vergleich zwischen dem ersten Betriebsparameter (P1) und einer zweiten Schwelle (TH2) durchzuführen, wobei die zweite Schwelle (TH2) durch die minimale annehmbare Gesamtfläche dargestellt wird, die von den Abschnitten des ersten Bilds (A) belegt wird, die eine geringere Helligkeit als die erste Schwelle (TH1) aufweisen;
iv. die Erzeugung eines ersten Benachrichtigungssignals (NS1) als eine Funktion des zweiten Vergleichs zu veranlassen, wobei in einer ersten linearen Skala von Helligkeitswerten, definiert zwischen einem Wert (V1) entsprechend einem Nullwert der Helligkeit und einem zweiten Wert (V2) entsprechend einem maximalen Wert der Helligkeit, wobei der absolute Wert der Differenz zwischen dem ersten Wert (V1) und dem zweiten Wert (V2) eine Amplitude der ersten linearen Skala definiert, die erste Schwelle (TH1) in Bezug auf die erste lineare Skala definiert ist, die erste Schwelle (TH1) derart ist, dass der absolute Wert der Differenz zwischen der ersten Schwelle (TH1) und dem ersten Wert (V1) zwischen 5 % und 20 % der Amplitude der ersten linearen Skala liegt.

10. Vorrichtung nach Anspruch 9, wobei der erste Betriebsparameter (P1) eine Gesamtfläche darstellt, die in dem ersten Bild (A) von den ersten Abschnitten (A1) belegt wird, die einem Helligkeitswert zugeordnet sind, der geringer als die erste Schwelle (TH1) ist.

11. Vorrichtung nach Anspruch 9 oder 10, wobei das erste Benachrichtigungssignal (NS1) erzeugt wird, wenn der erste Betriebsparameter (P1) geringer als die zweite Schwelle (TH2) ist.

12. Vorrichtung nach einem der Ansprüche 9 bis 11, wobei die erste Erfassungseinrichtung (110) einer ersten Oberfläche (10a) des halbfertigen Produkts (10) zugewandt ist, wobei die Vorrichtung (1) umfasst:
a1. eine zweite Erfassungseinrichtung (130), die einer zweiten Oberfläche (10b) des halbfertigen Produkts (10), die der ersten Oberfläche (10a) gegenüberliegt, zugewandt ist, wobei die zweite Erfassungseinrichtung (130) dazu geeignet ist, ein zweites Bild (B) zu erfassen, das einen Abschnitt der zweiten Oberfläche (10b) des halbfertigen Produkts (10) darstellt, wobei das zweite Bild (B) aus einer Vielzahl von zweiten Abschnitten (B1, B2) gebildet ist, die jeweils einem Helligkeitswert zugeordnet sind;
b1. einen zweiten Speicher (150b), der dazu ausgestaltet ist, eine dritte Schwelle (TH3) zu speichern;
c1. eine zweite Verarbeitungseinheit (180), die der zweiten Erfassungseinrichtung (130) zugeordnet und dazu ausgestaltet ist:
i'. einen dritten Vergleich zwischen dem Helligkeitswert der zweiten Abschnitte (B1, B2) und der dritten Schwelle (TH3) durchzuführen;
ii'. als eine Funktion des dritten Vergleichs einen zweiten Betriebsparameter (P2) zu bestimmen, der eine Gesamtfläche darstellt, die in dem zweiten Bild (B) von den zweiten Abschnitten (B1) belegt wird, die einem Helligkeitswert zugeordnet sind, der geringer als die dritte Schwelle (TH3) ist;
iii'. einen vierten Vergleich zwischen dem zweiten Betriebsparameter (P2) und einer vierten Schwelle (TH4) durchzuführen;
iv'. die Erzeugung eines zweiten Benachrichtigungssignals (NS2) als eine Funktion des vierten Vergleichs zu veranlassen, wenn der zweite Betriebsparameter (P2) geringer als die vierte Schwelle (TH4) ist.
wobei in einer zweiten linearen Skala von Helligkeitswerten, definiert zwischen einem dritten Wert (V3) entsprechend einem Nullwert der Helligkeit und einem vierten Wert (V4) entsprechend einem maximalen Wert der Helligkeit, wobei der absolute Wert der Differenz zwischen dem dritten Wert (V3) und dem vierten Wert (V4) eine Amplitude der zweiten linearen Skala definiert, die dritte Schwelle (TH3) in Bezug auf die zweite lineare Skala definiert ist, die dritte Schwelle (TH3) derart ist, dass der absolute Wert der Differenz zwischen der dritten Schwelle (TH3) und dem dritten Wert (V3) zwischen 5 % und 20 % der Amplitude der zweiten linearen Skala liegt.

13. Vorrichtung nach Anspruch 12, wobei der zweite Betriebsparameter (P2) eine Gesamtfläche darstellt, die in dem zweiten Bild (B) von den zweiten Abschnitten (B1) belegt wird, die einem Helligkeitswert zugeordnet sind, der geringer als die dritte Schwelle (TH3) ist.

14. Vorrichtung nach Anspruch 12 oder 13, wobei das zweite Benachrichtigungssignal (NS2) erzeugt wird, wenn der zweite Betriebsparameter (P2) geringer als die vierte Schwelle (TH4) ist.

## Revendications

1. Procédé pour commander la fabrication et l'acheminement de produits semi-finis dans un procédé de construction de pneus, ledit procédé comprenant le fait :
a. de détecter au moins une première image (A) représentant un produit semi-fini (10) où ladite première image (A) est formée par une pluralité de premières parties (A1, A2), chacune étant associée à une valeur de luminosité respective ;
b. de définir un premier seuil (TH1) pour lesdites valeurs de luminosité ;
c. d'effectuer une première comparaison entre la valeur de luminosité desdites premières parties (A1, A2) et ledit premier seuil (TH1) ;
d. en fonction de ladite première comparaison, de déterminer un premier paramètre de fonctionnement (P1) représentant une zone totale occupée dans ladite première image (A) par les premières parties (A1) associées à une valeur de luminosité inférieure audit premier seuil (TH1) ;
e. d'effectuer une deuxième comparaison entre ledit premier paramètre de fonctionnement (P1) et un deuxième seuil (TH2), où le deuxième seuil (TH2) est représenté par la zone minimale acceptable totalement occupée par les parties de la première image (A) ayant une luminosité inférieure au premier seuil (TH1);
f. de provoquer la génération d'un premier signal de notification (NS1) en fonction de ladite deuxième comparaison
dans lequel, dans une première échelle linéaire de valeurs de luminosité, définie entre une première valeur (V1) correspondant à une valeur nulle de luminosité et une deuxième valeur (V2) correspondant à une valeur maximale de luminosité, où la valeur absolue de la différence entre ladite première valeur (V1) et ladite deuxième valeur (V2) définit une amplitude de ladite première échelle linéaire, ledit premier seuil (TH1) est défini par rapport à ladite première échelle linéaire, ledit premier seuil (TH1) est tel que la valeur absolue de la différence entre ledit premier seuil (TH1) et ladite première valeur (V1) est comprise entre 5% et 20% de l'amplitude de ladite première échelle linéaire,
dans lequel ladite au moins une première image (A) est détectée tandis que ledit produit semi-fini (10) est déroulé d'une bobine (20) et déplacé le long d'un trajet (P) vers un poste de construction (30) pour la construction de produits semi-finis élémentaires, réalisés à partir dudit produit semi-fini (10).

2. Procédé selon la revendication 1, dans lequel ledit premier paramètre de fonctionnement (P1) représente une zone totale occupée dans ladite première image (A) par les premières parties (A1) associées à une valeur de luminosité inférieure audit premier seuil (TH1).

3. Procédé selon la revendication 1 ou 2, dans lequel ledit premier signal de notification (NS1) est généré si ledit premier paramètre de fonctionnement (P1) est inférieur audit deuxième seuil (TH2).

4. Procédé selon la revendication 3, comprenant le fait de provoquer la génération, si ledit premier paramètre de fonctionnement (P1) est inférieur audit deuxième seuil (TH2), d'un premier signal d'interruption (XS1) pour désactiver un ou plusieurs actionneur(s) (40) qui favorise/favorisent le déroulement dudit produit semi-fini (10) de ladite bobine (20) et/ou son déplacement vers ledit poste de construction (30).

5. Procédé selon l'une quelconque des revendications précédentes, comprenant le fait :
g. d'agencer une première image de référence (ARef) représentant une partie de produit semi-fini essentiellement dépourvue de résidus ou de corps étrangers, ladite première image de référence (ARef) étant formée par une pluralité de premières parties de référence (ARefl), chacune étant associée à un valeur de luminosité respective ;
h. de comparer les valeurs de luminosité desdites premières parties de référence (ARef1) audit premier seuil (TH1) ;
i. de déterminer un premier paramètre de référence (PRef1) représentant une zone totale occupée dans ladite première image de référence (ARef) par les premières parties de référence associées à une valeur de luminosité inférieure audit premier seuil (TH1) ;
l. de déterminer ledit deuxième seuil (TH2) en fonction dudit premier paramètre de référence (PRef1).

6. Procédé selon l'une quelconque des revendications précédentes, dans lequel ladite première image (A) représente une partie d'une première surface (10a) dudit produit semi-fini (10), ledit procédé comprenant le fait :
a1. de détecter une deuxième image (B) représentant une partie d'une deuxième surface dudit produit semi-fini (10), opposée à ladite première surface (10a), ladite deuxième image (B) étant formée par une pluralité de deuxièmes parties (B1, B2), chacune étant associée à une valeur de luminosité respective ;
b1. de définir un troisième seuil (TH3) pour lesdites valeurs de luminosité ;
c1. d'effectuer une troisième comparaison entre la valeur de luminosité desdites deuxièmes parties (B1, B2) et ledit troisième seuil (TH3) ;
d1. en fonction de ladite troisième comparaison, de déterminer un deuxième paramètre de fonctionnement (P2) représentant une zone totale occupée dans ladite deuxième image (B) par les deuxièmes parties (B1) associées à une valeur de luminosité inférieure audit troisième seuil (TH3) ;
e1. d'effectuer une quatrième comparaison entre ledit deuxième paramètre de fonctionnement (P2) et un quatrième seuil (TH4) ;
f1. de provoquer la génération d'un deuxième signal de notification (NS2) en fonction de ladite quatrième comparaison.
dans lequel, dans une deuxième échelle linéaire de valeurs de luminosité, définie entre une troisième valeur (V3) correspondant à une valeur nulle de luminosité et une quatrième valeur (V4) correspondant à une valeur maximale de luminosité, où la valeur absolue de la différence entre ladite troisième valeur (V3) et ladite quatrième valeur (V4) définit une amplitude de ladite deuxième échelle linéaire, ledit troisième seuil (TH3) est défini par rapport à ladite deuxième échelle linéaire, ledit troisième seuil (TH3) est tel que la valeur absolue de la différence entre ledit troisième seuil (TH3) et ladite troisième valeur (V3) est comprise entre 5% et 20% de l'amplitude de ladite deuxième échelle linéaire.

7. Procédé selon la revendication 6, dans lequel ledit deuxième paramètre de fonctionnement (P2) représente une zone totale occupée dans ladite deuxième image (B) par les deuxièmes parties (B1) associées à une valeur de luminosité inférieure audit troisième seuil (TH3).

8. Procédé selon la revendication 7, dans lequel ledit deuxième signal de notification (NS2) est généré si ledit deuxième paramètre de fonctionnement (P2) est inférieur audit quatrième seuil (TH4).

9. Appareil pour commander la fabrication et l'acheminement de produits semi-finis dans un procédé de construction de pneus, ledit appareil comprenant :
une bobine (20), sur laquelle un produit semi-fini (10) est enroulé ;
un poste de construction (30), pour construire des produits semi-finis élémentaires, réalisés à partir dudit produit semi-fini (10) ;
un ou plusieurs actionneur(s) (40) configuré(s) pour dérouler le produit semi-fini (10) de la bobine (20) et déplacer ledit produit semi-fini (10) vers le poste de construction (30) le long d'un trajet (P) ;
ledit appareil (1) comprenant en outre :
a. au moins un premier dispositif de détection (110) positionné le long dudit trajet (P) et configuré pour détecter au moins une première image (A) représentant un produit semi-fini (10) où ladite première image (A) est formée par une pluralité de premières parties (A1, A2), chacune étant associée à une valeur de luminosité respective ;
b. au moins une première mémoire (150) où un premier seuil (TH1) pour lesdites valeurs de luminosité est stocké ;
c. au moins une première unité de traitement (160), associée audit premier dispositif de détection (110) et à ladite mémoire (150) et configurée pour :
i. effectuer une première comparaison entre la valeur de luminosité desdites premières parties (A1, A2) et ledit premier seuil (TH1) ;
ii. en fonction de ladite première comparaison, déterminer un premier paramètre de fonctionnement (P1) représentant une zone totale occupée dans ladite première image (A) par les premières parties (A1) associées à une valeur de luminosité inférieure audit premier seuil (TH1) ;
iii. effectuer une deuxième comparaison entre ledit premier paramètre de fonctionnement (P1) et un deuxième seuil (TH2), où le deuxième seuil (TH2) est représenté par la zone minimale acceptable totalement occupée par les parties de la première image (A) ayant une luminosité inférieure au premier seuil (TH1);
iv. provoquer la génération d'un premier signal de notification (NS1) en fonction de ladite deuxième comparaison
dans lequel, dans une première échelle linéaire de valeurs de luminosité, définie entre une première valeur (V1) correspondant à une valeur nulle de luminosité et une deuxième valeur (V2) correspondant à une valeur maximale de luminosité, où la valeur absolue de la différence entre ladite première valeur (V1) et ladite deuxième valeur (V2) définit une amplitude de ladite première échelle linéaire, ledit premier seuil (TH1) est défini par rapport à ladite première échelle linéaire, ledit premier seuil (TH1) est tel que la valeur absolue de la différence entre ledit premier seuil (TH1) et ladite première valeur (V1) est comprise entre 5% et 20% de l'amplitude de ladite première échelle linéaire.

10. Appareil selon la revendication 9, dans lequel ledit premier paramètre de fonctionnement (P1) représente une zone totale occupée dans ladite première image (A) par les premières parties (A1) associées à une valeur de luminosité inférieure audit premier seuil (TH1).

11. Appareil selon la revendication 9 ou 10, dans lequel ledit premier signal de notification (NS1) est généré si ledit premier paramètre de fonctionnement (P1) est inférieur audit deuxième seuil (TH2).

12. Appareil selon l'une quelconque des revendications 9 à 11, dans lequel ledit premier dispositif de détection (110) fait face à une première surface (10a) dudit produit semi-fini (10), ledit appareil (1) comprenant :
a1. un deuxième dispositif de détection (130) faisant face à une deuxième surface (10b) dudit produit semi-fini (10), opposée à ladite première surface (10a), ledit deuxième dispositif de détection (130) étant adapté pour détecter une deuxième image (B) représentant une partie de la deuxième surface (10b) dudit produit semi-fini (10), ladite deuxième image (B) étant formée par une pluralité de deuxièmes parties (B1, B2), chacune étant associée à une valeur de luminosité respective ;
b1. une deuxième mémoire (150b) configurée pour stocker un troisième seuil (TH3) ;
c1. une deuxième unité de traitement (180), associée audit deuxième dispositif de détection (130) et configurée pour :
i'. effectuer une troisième comparaison entre la valeur de luminosité desdites deuxièmes parties (B1, B2) et ledit troisième seuil (TH3) ;
ii'. en fonction de ladite troisième comparaison, déterminer un deuxième paramètre de fonctionnement (P2) représentant une zone totale occupée dans ladite deuxième image (B) par les deuxièmes parties (B1) associées à une valeur de luminosité inférieure audit troisième seuil (TH3) ;
iii'. effectuer une quatrième comparaison entre ledit deuxième paramètre de fonctionnement (P2) et un quatrième seuil (TH4) ;
iv'. si ledit deuxième paramètre de fonctionnement (P2) est inférieur audit quatrième seuil (TH4), provoquer la génération d'un deuxième signal de notification (NS2) en fonction de ladite quatrième comparaison.
dans lequel, dans une deuxième échelle linéaire de valeurs de luminosité, définie entre une troisième valeur (V3) correspondant à une valeur nulle de luminosité et une quatrième valeur (V4) correspondant à une valeur maximale de luminosité, où la valeur absolue de la différence entre ladite troisième valeur (V3) et ladite quatrième valeur (V4) définit une amplitude de ladite deuxième échelle linéaire, ledit troisième seuil (TH3) est défini par rapport à ladite deuxième échelle linéaire, ledit troisième seuil (TH3) est tel que la valeur absolue de la différence entre ledit troisième seuil (TH3) et ladite troisième valeur (V3) est comprise entre 5% et 20% de l'amplitude de ladite deuxième échelle linéaire.

13. Appareil selon la revendication 12, dans lequel ledit deuxième paramètre de fonctionnement (P2) représente une zone totale occupée dans ladite deuxième image (B) par les deuxièmes parties (B1) associées à une valeur de luminosité inférieure audit troisième seuil (TH3).

14. Appareil selon la revendication 12 ou 13, dans lequel ledit deuxième signal de notification (NS2) est généré si ledit deuxième paramètre de fonctionnement (P2) est inférieur audit quatrième seuil (TH4).
